# EUROPÄISCHE PATENTANMELDUNG

(11) **EP 3 326 706 A1**
(43) Veröffentlichungstag der Anmeldung: **30.05.2018**
(21) Anmeldenummer: 17202072.9
(22) Anmeldetag: 16.11.2017
(51) Int. Cl.: B01D 46/00, B01D 46/24, B01D 46/52

(54) **FILTEREINRICHTUNG**

(30) Priorität: 23.11.2016 DE 102016223218
(71) Anmelder: Filtration Group GmbH, 74613 Öhringen (DE)
(72) Erfinder: Püttmann, Herbert, 74639 Zweiflingen (DE)
(74) Vertreter: BRP Renaud & Partner mbB Rechtsanwälte Patentanwälte Steuerberater

(57) **Zusammenfassung**

Die vorliegende Erfindung betrifft eine Filtereinrichtung (1) zum Filtern von Gas,
- mit einem Filterelement (2), das einen Filterkörper (10), eine erste Endscheibe (12) und eine zweite Endscheibe (14) aufweist,
- mit einer Reinigungseinrichtung (16), die eine Rotationsdüse (61) aufweist, die eine sich koaxial zur Längsmittelachse (8) des Filterelements (2) erstreckende Stange (18) und wenigstens ein Düsenrohr (19) aufweist,
- mit einem Träger (3), an dem das Filterelement (2) befestigt ist,
- wobei die Reinigungseinrichtung (16) einen Druckanschluss (22) zum Zuführen eines Rückspülgases zur Rotationsdüse (61) aufweist,
- wobei der Druckanschluss (22) durch einen axialen ersten Endabschnitt (23) der Stange (18) hindurch mit dem jeweiligen Düsenrohr (19) fluidisch verbunden ist.

Die Dauerhaltbarkeit der Filtereinrichtung lässt sich verlängern, wenn der Druckanschluss (22) mit dem ersten Endabschnitt (23) axial fest verbunden ist.

## Beschreibung

Die vorliegende Erfindung betrifft eine Filtereinrichtung zum Filtern von Gas mit den Merkmalen des Oberbegriffs des Anspruchs 1.

Eine gattungsgemäße Filtereinrichtung ist aus der DE 10 2007 035 225 A1 bekannt. Sie umfasst ein Filterelement, das einen ringförmigen Filterkörper aus Filtermaterial, an einem ersten Längsende des Filterkörpers eine erste Endscheibe und an einem zweiten Längsende des Filterkörpers eine zweite Endscheibe aufweist. Ferner umfasst die Filtereinrichtung eine Reinigungseinrichtung zum Abreinigen des Filtermaterials, die im Inneren des Filterelements eine Rotationsdüse aufweist, die eine sich koaxial zur Längsmittelachse des Filterelements erstreckende Stange und wenigstens ein an der Stange um die Längsmittelachse des Filterelements drehbar gelagertes Düsenrohr zum Rückspülen des Filtermaterials mittels eines Rückspülgases aufweist. Außerdem weist die Filtereinrichtung einen Träger auf, an dem das Filterelement so befestigt ist, dass die erste Endscheibe an einer Rohseite des Trägers eine Durchtrittsöffnung des Trägers einfasst. Die Reinigungseinrichtung ist außerdem mit einer Halterung ausgestattet, die an einer von der Rohseite abgewandten Reinseite des Trägers abgestützt ist und die einen Druckanschluss zum Zuführen des Rückspülgases zur Rotationsdüse aufweist. Dabei ist der Druckanschluss durch einen axialen ersten Endabschnitt der Stange hindurch mit dem jeweiligen Düsenrohr fluidisch verbunden. Bei der bekannten Filtereinrichtung ist zur fluidischen Verbindung des Druckanschlusses mit dem ersten Endabschnitt der Stange vorgesehen, dass sich der Druckanschluss über eine axial verstellbare Hülse an einem dazu komplementären Sitz axial abstützt, der an einer axialen Stirnseite des ersten Endabschnitts ausgebildet ist.

Bei der bekannten Filtereinrichtung ist ein axialer zweiter Endabschnitt der Stange axial an der zweiten Endscheibe des Filterelements abgestützt, so dass das gesamte Gewicht der Rotationsdüse, also der Stange und des jeweiligen Düsenrohrs über die untere Endscheibe auf den Filterkörper und von diesem auf die erste Endscheibe übertragen wird, die ihrerseits dann das gesamte Gewicht der Stange, des jeweiligen Düsenrohrs, der zweiten Endscheibe und des Filterkörpers über die jeweilige Befestigung auf den Träger überträgt. Üblicherweise sind die Endscheiben mit dem Filterkörper verklebt. Diese Klebverbindungen sind somit einer hohen Belastung ausgesetzt. Es hat sich gezeigt, dass bei höheren Temperaturen, z. Bsp. ab 50°C, diese Klebverbindungen, je nach Klebstoff, weich werden und/oder ihre Festigkeit verlieren, so dass es zur Desintegration des Filterelements kommen kann.

Die vorliegende Erfindung beschäftigt sich mit dem Problem, für eine Filtereinrichtung der vorstehend beschriebenen Art eine verbesserte Ausführungsform anzugeben, die sich insbesondere durch eine erhöhte Betriebssicherheit auch bei höheren Betriebstemperaturen auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Druckanschluss axial fest mit dem ersten Endabschnitt der Stange zu verbinden. Hierdurch wird eine Art Zuganker geschaffen, nämlich die Einheit aus Stange und damit fest verbundenem Druckanschluss. Dieser Zuganker ist über die Halterung an der Reinseite des Trägers abgestützt, so dass nun das gesamte Gewicht der Stange und des jeweiligen Düsenrohrs über den Druckanschluss und über die Halterung am Träger abgestützt ist. Hierdurch ergibt sich eine signifikante Entlastung der Klebeverbindungen der Endscheiben am Filterkörper. Dies erhöht die Dauerfestigkeit der Klebverbindungen und ermöglicht höhere Betriebstemperaturen für die Filtereinrichtung. Die erste Endscheibe muss hierdurch maximal nur das Gewicht des Filterelements tragen. Der Filterkörper erstreckt sich axial durchgängig und axial einteilig von der ersten Endscheibe zur zweiten Endscheibe. Hierdurch ist es sogar grundsätzlich möglich, dass der vorstehend genannte Zuganker bzw. die Rotationsdüse das Filterelement zumindest teilweise von unten trägt und insoweit die Verbindung zwischen erster Endscheibe und Filterkörper entlastet. Dies kann jedoch die Montage und somit das Wechseln des Filterelements beeinträchtigen. Bevorzugt ist daher eine Bauweise, bei der die Verbindung zwischen Träger und Rotationsdüse im Wesentlichen nur das Gewicht der Rotationsdüse hält, während die Befestigung zwischen Träger und Filterelement im Wesentlichen nur das Gewicht des Filterelements hält. Rotationsdüse und Filterelement sind somit im montierten Zustand hinsichtlich der Gewichtsbelastung voneinander entkoppelt.

Zweckmäßig ist diese axial feste Verbindung zwischen Druckanschluss und erstem Endabschnitt als lösbare Verbindung ausgestaltet, so dass es vergleichsweise einfach ist, das Filterelement zu wechseln. Bei getrennter Verbindung lässt sich nach dem Lösen der Befestigung zwischen erster Endscheibe und Träger das Filterelement mit darin angeordneter Reinigungseinrichtung vorzugsweise gegenüber dem Träger kippen und seitlich aus einem Rohraum herausnehmen, in dem das Filterelement am Träger angeordnet ist.

Zweckmäßig kann vorgesehen sein, dass die Befestigung der ersten Endscheibe am Träger so ausgestaltet ist, dass sie bei gelöster Verbindung zwischen Druckanschluss und erstem Endabschnitt zum Wechseln des Filterelements ein Kippen des Filterelements relativ zum Träger um eine im Bereich der ersten Endscheibe verlaufende und sich quer zur Längsmittelachse des Filterelements erstreckende Kippachse ermöglicht. Bei gelöster Verbindung zwischen Druckanschluss und erstem Endabschnitt lässt sich dabei die Rotationsdüse gemeinsam mit dem Filterelement kippen, wodurch der axial erforderliche Bauraum zum Wechseln des Filterelements signifikant reduziert werden kann. Die Befestigung der ersten Endscheibe kann dabei beispielsweise an einem ersten Umfangsabschnitt der ersten Endscheibe eine Lagerung zum verschwenkbaren Halten der ersten Endscheibe am Träger aufweisen, welche die Kippachse definiert, z.B. in Form eines Hakens zum Einhängen der ersten Endscheibe. Außerdem kann diese Befestigung an einem vom ersten Umfangsabschnitt entfernten, vorzugsweise diametral gegenüberliegenden zweiten Umfangsabschnitt der ersten Endscheibe eine Fixierung zum Festlegen der ersten Endscheibe am Träger aufweisen, z.B. in Form einer Rastverbindung oder einer Klammer oder einer Verschraubung.

Zweckmäßig kann vorgesehen sein, dass die zweite Endscheibe radial und/oder axial an der Stange abgestützt ist. Mit anderen Worten, die zweite Endscheibe ist abgesehen von einer Durchtrittsöffnung für die Stange als geschlossene Endscheibe konzipiert. Dies vereinfacht die Abdichtung gegenüber der Umgebung.

Üblicherweise werden derartige Filtereinrichtung so montiert, dass sich der Träger, bspw. in Form einer ebenen Platte, im Wesentlichen horizontal erstreckt, während das jeweilige Filterelement an einer Unterseite des Trägers hängend angeordnet ist, so dass sich die Längsmittelachse des Filterelements im Wesentlichen vertikal erstreckt. Dementsprechend steht unterhalb des Filterelements in der Regel kein ausreichender Montageraum zur Verfügung, um das bevorzugt längliche Filterelement nach unten von der Stange und dem jeweiligen Düsenrohr abzuziehen. Folglich vereinfachen sich Montage und Demontage, wenn die Stange lösbar am Druckanschluss befestigt ist.

Bevorzugt ist eine Ausführungsform, bei welcher der erste Endabschnitt der Stange über eine Drehbewegung am Druckanschluss befestigbar und ggf. davon lösbar ist.

Eine derartige axial feste Verbindung, die mit einer Drehbewegung einhergeht und die insbesondere lösbar ausgestaltet ist, kann bspw. mit Hilfe eines Bajonettverschlusses realisiert werden.

Bevorzugt kommt als axial feste und insbesondere lösbare Verbindung, die mit einer Drehbewegung einhergeht, eine Schraubverbindung zum Einsatz. Dabei kann der erste Endabschnitt ein Innengewinde aufweisen und auf ein Außengewinde des Druckanschlusses aufgeschraubt sein. Ebenso ist denkbar, den ersten Endabschnitt mit einem Außengewinde zu versehen und in ein Innengewinde des Druckanschlusses einzuschrauben.

Besonders vorteilhaft ist eine Weiterbildung, bei welcher der Druckanschluss über die Halterung drehfest am Träger gehalten ist und bei welcher der erste Endabschnitt über eine Drehbewegung am Druckanschluss befestigbar und ggf. davon lösbar ist. Diese Bauweise hat den Vorteil, dass bestehende Filtereinrichtungen mit stationärem Druckanschluss vergleichsweise einfach umgerüstet werden können, um die hier vorgestellte Lösung mit Zuganker nachträglich zu realisieren. Grundsätzlich ist jedoch auch eine Ausführungsform denkbar, bei welcher der Druckanschluss um die Längsmittelachse des Filterelements drehbar an der Halterung bzw. am Träger gehalten ist.

Eine andere vorteilhafte Ausführungsform sieht vor, dass die vorgesehene Befestigung zwischen Druckanschluss und erstem Endabschnitt, die Befestigung zwischen Träger und Filterelement , die Reinigungseinrichtung und das Filterelement so aufeinander abgestimmt sind, dass der erste Endabschnitt an dem Druckanschluss befestigbar ist und ggf. davon lösbar ist, wenn das Filterelement am Träger befestigt ist. Diese Bauweise hat den Vorteil, dass das Filterelement mit den darin angeordneten Komponenten der Reinigungseinrichtung, nämlich Rotationsdüse, insbesondere Stange und jeweiliges Düsenrohr, in üblicher Weise montiert werden kann, in dem zunächst das Filterelement am Träger befestigt wird. Anschließend kann bei befestigtem Filterelement die feste Verbindung zwischen Stange und Druckanschluss über den ersten Endabschnitt hergestellt werden.

Vorteilhaft ist eine Ausführungsform, bei der ein axialer zweiter Endabschnitt der Stange durch die zweite Endscheibe hindurchgeführt ist und außerhalb des Filterelements einen Drehmomenteingriff aufweist, über den ein Befestigungsdrehmoment zum Befestigen, insbesondere zum Anschrauben, des ersten Endabschnitts am Druckanschluss in die Stange einleitbar ist. Auf diese Weise lässt sich besonders einfach die Befestigung, vorzugsweise die Schraubverbindung, zwischen erstem Endabschnitt und Druckanschluss bei bereits am Träger befestigtem Filterelement herstellen.

Vorteilhaft ist eine Weiterbildung, bei welcher der Drehmomenteingriff ein am zweiten Endabschnitt ausgebildetes Außengewinde aufweist, an das ein Handgriff anschraubbar ist, so dass über den angeschraubten Handgriff das Befestigungsdrehmoment in die Stange einleitbar ist. Über den Handgriff lässt sich somit die Befestigung zwischen erstem Endabschnitt und Druckanschluss ohne separates Werkzeug realisieren. Sofern die Befestigung zwischen erstem Endabschnitt und Druckanschluss als Verschraubung ausgestaltet ist, ist diese hinsichtlich ihres Drehsinns gleich orientiert wie die Verschraubung zwischen Handgriff und zweitem Endabschnitt. Dies hat zur Folge, dass durch das Festdrehen des Handgriffs gleichzeitig auch die Schraubverbindung zwischen erstem Endabschnitt und Druckanschluss fest gezogen wird.

Bei einer anderen vorteilhaften Ausführungsform kann der Drehmomenteingriff einen am zweiten Endabschnitt ausgebildeten Werkzeugeingriff aufweisen, über den mittels eines dazu komplementären Werkzeugs das Befestigungsdrehmoment, sowie ein Lösedrehmoment zum Lösen der Befestigung des ersten Endabschnitts am Druckanschluss in die Stange einleitbar ist. Sofern gemäß der bevorzugten Ausführungsform die Befestigung zwischen erstem Endabschnitt und Druckanschluss eine Verschraubung ist, bewirkt das Lösedrehmoment ein Abschrauben des ersten Endabschnitts vom Druckanschluss. Sofern über den vorgenannten Handgriff versucht wird, dieses Lösedrehmoment in die Stange einzuleiten, besteht die Gefahr, dass sich der aufgeschraubte Handgriff zuerst vom zweiten Endabschnitt löst, bevor sich der erste Endabschnitt von dem Druckanschluss löst. Dies wird mit Hilfe des zusätzlichen Werkzeugeingriffs vermieden.

Vorteilhaft ist eine Weiterbildung, bei welcher der Werkzeugeingriff bei angeschraubtem Handgriff verdeckt ist. Dies führt dazu, dass der Werkzeugeingriff während des Betriebs der Filtereinrichtung vor einer Verschmutzung effizient geschützt ist und bei gelöstem Handgriff sofort zur Verfügung steht. Die Gefahr einer Verschmutzung besteht, da sich das Filterelement und somit auch der außerhalb des Filterelements angeordnete zweite Endabschnitt mit Handgriff in einem Rohraum befinden, über den das mit Verunreinigungen beladene Gas dem Filterelement zugeführt wird.

Eine andere Ausführungsform sieht vor, dass der angeschraubte Handgriff mittels eines Sicherungselements gegen ein Abschrauben gesichert ist, so dass über den Handgriff auch ein Lösedrehmoment zum Lösen der Befestigung des ersten Endabschnitts am Druckanschluss in die Stange einleitbar ist. Das Lösedrehmoment ist dem Befestigungsdrehmoment entgegengesetzt orientiert. Auch hier gilt für die bevorzugte Ausführungsform mit einer Verschraubung zwischen erstem Endabschnitt und Druckanschluss, dass das Lösedrehmoment einem Abschraubdrehmoment entspricht, das zum Abschrauben des ersten Endabschnitts vom Druckanschluss dient. Mit Hilfe dieses Sicherungselements lässt sich somit der Handgriff besonders einfach auch zum Lösen der Befestigung zwischen dem ersten Endabschnitt und Druckanschluss nutzen.

Vorteilhaft kann es sich beim Sicherungselement und einen Splint handeln, der eine Öffnung in einem Gewindeabschnitt des Handgriffs durchdringt und in eine Öffnung im Außengewinde des zweiten Endabschnitts eindringt. Der Splint kann optional mit einem manuell greifbaren Abzugselement, wie z. Bsp. einem Abzugsring, ausgestattet sein, um ein manuelles, also werkzeug loses Entfernen des Splints zu ermöglichen. Der Splint muss entfernbar sein, um den Handgriff vom zweiten Endabschnitt entfernen zu können. Der Handgriff muss vom zweiten Endabschnitt entfernt werden, um für einen Wechsel des Filterelements die Stange aus der zweiten Endscheibe herausziehen zu können.

Zweckmäßig ist die im Außengewinde des zweiten Endabschnitts ausgebildete Öffnung als Durchgangsöffnung konzipiert. Vorteilhaft sind am Gewindeabschnitt des Handgriffs zwei einander diametral gegenüberliegende Öffnungen ausgebildet, so dass der Splint letztlich durch diese beiden Öffnungen im Gewindeabschnitt und durch die Durchgangsöffnung im Außengewinde durchgeführt ist.

Eine andere Ausführungsform sieht vor, dass das Sicherungselement eine auf das Außengewinde des zweiten Endabschnitts aufgeschraubte Kontermutter ist, die gegen eine der zweiten Endscheibe zugewandte Stirnseite des Handgriffs gekontert ist. Bei entsprechendem Drehmoment zwischen Kontermutter und Handgriff lässt sich der Handgriff nunmehr auch zum Einleiten des Lösedrehmoments nutzen.

Vorteilhaft ist eine Ausführungsform, bei der die Kontermutter einen manuell betätigbaren Knebel aufweist, über den das Lösedrehmoment in die Stange einleitbar ist. Ebenso lässt sich mit Hilfe des Knebels der Handgriff ohne zusätzliches separates Werkzeug vom zweiten Endabschnitt entfernen, bspw. im Rahmen eines Filterelementwechsels.

Vorteilhaft kann die erste Endscheibe eine zentrale Scheibenöffnung aufweisen, in die ein Zentrierring eingesetzt ist. Der Zentrierring trägt über eine oder mehrere Speichen eine Nabe, und zwar so, dass die Nabe koaxial zur Längsmittelachse des Filterelements angeordnet ist. In dieser Nabe ist der erste Endabschnitt der Stange axial geführt. Hierdurch vereinfacht sich die Montage und Demontage des Filterelements mit darin angeordneter Stange und jeweiligem Düsenrohr. Ferner vereinfacht die axiale Führung der Stange an der Nabe das Herstellen der Befestigung zwischen erstem Endabschnitt und Druckanschluss, insbesondere das Aufschrauben des ersten Endabschnitts auf den Druckanschluss.

Eine andere Ausführungsform sieht vor, dass das jeweilige Düsenrohr im Bereich der ersten Endscheibe und im Bereich der zweiten Endscheibe an der Stange drehbar gelagert ist. Somit erstreckt sich das jeweilige Düsenrohr im Wesentlichen über die gesamte axiale Erstreckung des Filterkörpers und kann somit nahezu das gesamte Filtermaterial durch Rückspülung abreinigen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine isometrische Ansicht einer Filtereinrichtung,
- Fig. 2: einen Längsschnitt der Filtereinrichtung im Bereich eines Filterelements,
- Fig. 3: eine vergrößerte Ansicht eines Details III aus Fig. 2 der Filtereinrichtung bei einer ersten Ausführungsform,
- Fig. 4: eine Detailansicht wie in Fig. 3, jedoch bei einer zweiten Ausführungsform,
- Fig. 5: eine vergrößerte Ansicht eines Details V aus Fig. 2 bei einer ersten Ausführungsform in einem ersten Zustand,
- Fig. 6: eine Detailansicht wie in Fig. 5, jedoch in einem zweiten Zustand,
- Fig. 7: eine Detailansicht wie in den Fig. 5 und 6, jedoch bei einer zweiten Ausführungsform,
- Fig. 8: eine Detailansicht in den Fig. 5, 6 und 7, jedoch bei einer dritten Ausführungsform.

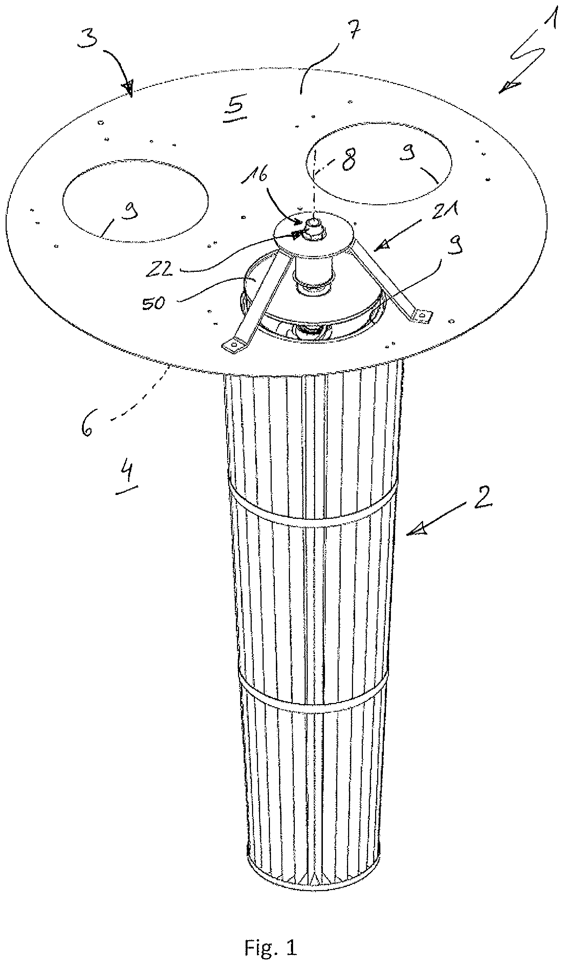

Entsprechend Fig. 1 umfasst eine Filtereinrichtung 1 zumindest ein Filterelement 2 und einen Träger 3. Der Träger 3 ist hier als ebene Platte ausgestaltet und exemplarisch für die Festlegung von drei derartigen Filterelementen 2 ausgelegt, wobei in Fig. 1 jedoch nur ein Filterelement 2 gezeigt ist. Der Träger 3 trennt einen Rohraum 4, in dem sich das jeweilige Filterelement 2 erstreckt, von einem Reinraum 5. Dementsprechend besitzt der Träger 3 eine dem Rohraum 4 zugewandte Rohseite 6 und eine dem Reinraum 5 zugewandte Reinseite 7. Zweckmäßig ist das jeweilige Filterelement 2 am Träger 3 hängend angeordnet, so dass sich eine Längsmittelachse 8 des jeweiligen Filterelements 2 im Wesentlichen vertikal erstreckt. Im Unterschied dazu erstreckt sich dann der plattenförmige Träger 3 im Wesentlichen horizontal.

Der Träger 3 besitzt für jedes Filterelement 2 eine Durchtrittsöffnung 9. Zu reinigendes Gas wird dem Rohraum 4 zugeführt, strömt durch das Filterelement 2. Gereinigtes Gas tritt dann durch die Durchtrittsöffnung 9 in den Reinraum 5 ein.

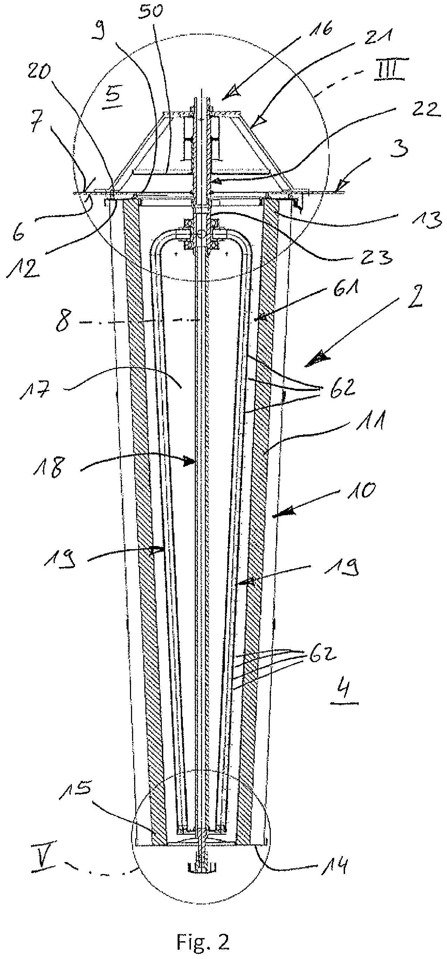

Entsprechend den Fig. 1 und 2 besitzt das jeweilige Filterelement 2 einen ringförmigen Filterkörper 10 aus einem geeigneten, im Beispiel plissierten, Filtermaterial 11, eine erste Endscheibe 12 an einem ersten Längsende 13 des Filterkörpers 10 und eine zweite Endscheibe 14 an einem zweiten Längsende 15 des Filterkörpers 10.

Die Filtereinrichtung 1 ist außerdem mit einer Reinigungseinrichtung 16 ausgestattet, die am jeweiligen Filterelement 2 zum Abreinigen des Filtermaterials 11 dient und die für jedes Filterelement 2 in einem Inneren 17 des jeweiligen Filterelements 2 eine Rotationsdüse 61 aufweist. Die jeweilige Rotationsdüse 61 weist eine Stange 18 und wenigstens ein Düsenrohr 19 auf, das eine Vielzahl von in Fig. 2 angedeuteten Austrittsdüsen 62 besitzt. Im gezeigten Beispiel sind zwei Düsenrohre 19 vorgesehen, die sich diametral gegenüberliegen. Die Stange 18 erstreckt sich koaxial zur Längsmittelachse 8 des Filterelements 2 und dient zur Lagerung des jeweiligen Düsenrohrs 19, so dass diese um die Längsmittelachse 8 drehbar ist. Das jeweilige Düsenrohr 19 dient zum Rückspülen des Filtermaterials 11 mittels eines Rückspülgases. Zweckmäßig wird hierzu das mit Hilfe des Filterelements 2 gereinigte Gas verwendet. Ebenso lässt sich ein Fremdgas zur Rückspülung verwenden. Das jeweilige Rückspülgas tritt bei einem Reinigungsvorgang oder Rückspülvorgang durch die Austrittsdüsen 62 aus dem jeweiligen Düsenrohr 19 aus und beaufschlagt das Filtermaterial 11 an der Reinseite. Die Austrittsdüsen 62 sind am jeweiligen Düsenrohr 19 über die ganze Länge des Düsenrohrs 19 verteilt übereinander angeordnet und so orientiert, dass sie einerseits das Filtermaterial 11 von innen, also auf der Reinseite beaufschlagen und andererseits einen Rückstoßimpuls zum rotierenden Antreiben des jeweiligen Düsenrohrs 19 erzeugen.

Wie sich insbesondere Fig. 2 entnehmen lässt, ist das jeweilige Filterelement 2 am Träger 3 so befestigt, dass die erste Endscheibe 12 an der Rohseite 6 des Trägers 3 die zugehörige Durchtrittsöffnung 9 des Trägers 3 einfasst. An der ersten Endscheibe 12 kann eine ringförmig umlaufende Dichtung 20 ausgebildet sein, die axial an der Rohseite 6 des Trägers 3 dichtend anliegt.

Die Reinigungseinrichtung 16 ist außerdem für jedes Filterelement 2 mit einer Halterung 21 ausgestattet, die an der Reinseite 7 des Trägers 3 abgestützt ist, bspw. über die in Fig. 1 exemplarisch erkennbare Drei-Bein-Abstützung. Die Halterung 21 weist außerdem einen, insbesondere rohrförmigen, Druckanschluss 22 auf, an den eine hier nicht gezeigte Druckgasversorgung zum Zuführen von unter Druck gesetztem Rückspülgas anschließbar ist. Der Druckanschluss 22 dient zum Zuführen des Rückspülgases zur Rotationsdüse 61 bzw. zum jeweiligen Düsenrohr 19. Hierzu ist der Druckanschluss 22 durch einen axialen ersten Endabschnitt 23 der Stange 18 hindurch mit dem jeweiligen Düsenrohr 19 fluidisch verbunden. Hierzu ist die Stange 18 zumindest im ersten Endabschnitt 23 hohl bzw. als Rohr ausgestaltet. Der Druckanschluss 22 ist im fertig montierten Zustand des Filterelements 2 und der Reinigungseinrichtung 16 mit dem ersten Endabschnitt 23 der Stange 18 über eine Verbindung 24 axial fest verbunden. Über diese axiale feste Verbindung 24 kann das gesamte Gewicht der Stange 18 und des jeweiligen Düsenrohrs 19, also der Rotationsdüse 61 auf den Druckanschluss 22 übertragen und von diesem über die Halterung 21 am Träger 3 abgestützt werden. Insbesondere sind dadurch Verbindungen zwischen dem Filterkörper 10 und den Endscheiben 12, 14 vom Gewicht der Rotationsdüse 61 entlastet. Bei diesen Verbindungen kann es sich z.B. um Klebeverbindungen handeln.

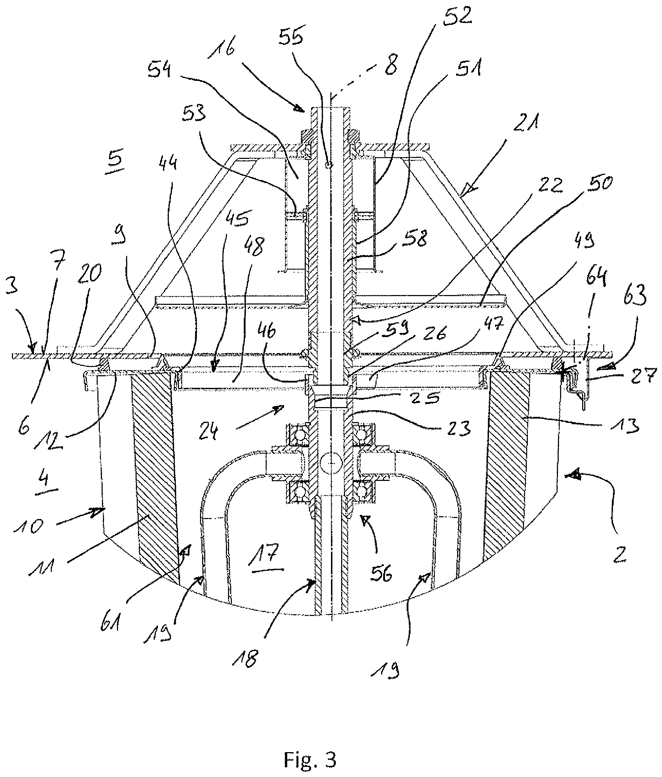

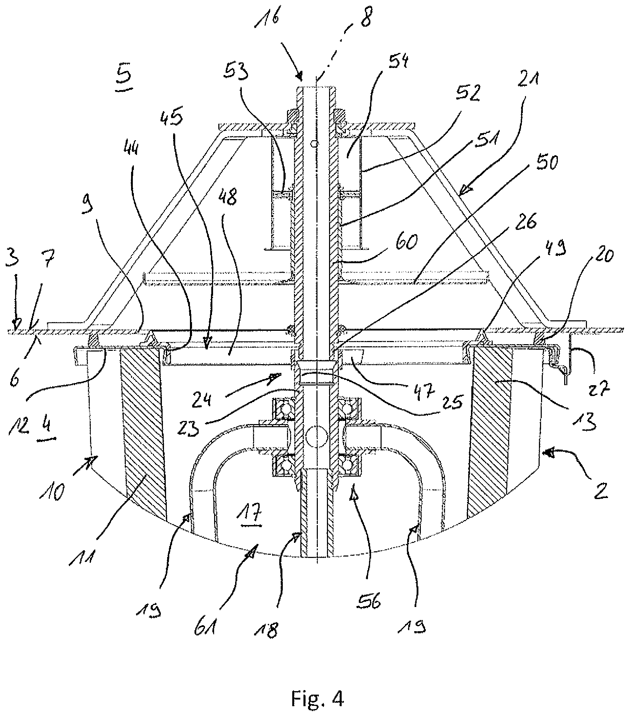

Wie sich den Fig. 3 und 4 entnehmen lässt, kann diese axial feste Verbindung 24 gemäß der hier vorgestellten, besonders bevorzugten Ausführungsform durch eine Schraubverbindung bzw. Verschraubung realisiert sein, die nachfolgend ebenfalls mit 24 bezeichnet wird. Diese Verschraubung 24 ist in den Fig. 2 bis 4 gelöst dargestellt, so dass in den Fig. 2 bis 4 der erste Endabschnitt 23 vom Druckanschluss 22 gelöst bzw. davon abgeschraubt ist. Die Verschraubung 24 wird dabei durch ein Innengewinde 25 am ersten Endabschnitt 23 und ein Außengewinde 26 am Druckanschluss 22 gebildet. Somit wird der erste Endabschnitt 23 auf den Druckanschluss 22 aufgeschraubt. Der aufgeschraubte bzw. angeschraubte Zustand ist leicht vorstellbar.

Zweckmäßig ist der Druckanschluss 22 über die Halterung 21 drehfest am Träger 3 gehalten. In der Folge ist der erste Endabschnitt 23 über eine Drehbewegung am Druckanschluss 22 befestigbar, wobei diese Drehbewegung um die Längsmittelachse 8 rotiert. Sofern wie hier eine Schraubverbindung 24 vorliegt, erfolgt die Drehbewegung zweckmäßig über mehrere Umdrehungen. Alternativ zu einer Schraubverbindung ist auch ein Bajonettverschluss als Verbindung 24 vorstellbar. Nachfolgend wird mit Bezug auf die gezeigten Beispiele jedoch stets von der Schraubverbindung 24 ausgegangen. Es ist klar, dass auch eine beliebige andere Verbindungstechnik zur Anwendung kommen kann, die eine Drehbewegung beinhaltet, wie z.B. ein Bajonettverschluss.

Das Filterelement 2 und die Reinigungseinrichtung 16 sind so aufeinander abgestimmt, dass der erste Endabschnitt 23 an den Druckanschluss 22 anschraubbar und davon abschraubbar ist, wenn das Filterelement 2 am Träger 3 befestigt ist. Die Befestigung des Filterelements 2 am Träger 3 kann in üblicher Weise so erfolgen, dass lediglich die erste Endscheibe 12 am Träger 3 befestigt ist. Hierbei kommt eine geeignete lösbare Befestigung 63 zum Einsatz. Beispielsweise kann die erste Endscheibe 12 hierzu an einem Umfangsabschnitt, der in den Fig. 2 bis 4 rechts erkennbar ist, an einem Haken 27 eingehängt sein, der fest mit dem Träger 3 verbunden ist. An wenigstens einem anderen, hier nicht erkennbaren Umfangsabschnitt ist die erste Endscheibe 12 bspw. mit Hilfe eines elastischen Spannelements, insbesondere in Form einer Federklammer, am Träger 3 gehalten.

Die Befestigung 63 der ersten Endscheibe 12 am Träger 3 ist hier so ausgestaltet, dass sie bei gelöster Verbindung 24 zwischen dem Druckanschluss 22 und dem erstem Endabschnitt 23 zum Wechseln des Filterelements 2 ein Kippen des Filterelements 2 relativ zum Träger 3 um eine im Bereich der ersten Endscheibe 12 verlaufende und sich quer zur Längsmittelachse 8 des Filterelements 2 erstreckende Kippachse 64 ermöglicht, die in Fig. 3 senkrecht auf der Zeichnungsebene steht. Bei gelöster Verbindung 24 zwischen Druckanschluss 22 und erstem Endabschnitt 23 lässt sich dabei die Rotationsdüse 61, also Stange 18 und Düsenrohre 19 gemeinsam mit dem Filterelement 2 kippen. Hierdurch wird für den Wechsel des Filterelements 2 kein zusätzlicher axialer Bauraum benötigt. Die Befestigung 63 der ersten Endscheibe 12 kann dabei beispielsweise an einem in Fig. 3 rechts erkennbaren ersten Umfangsabschnitt der ersten Endscheibe 12 eine Lagerung 27 zum verschwenkbaren Halten der ersten Endscheibe 12 am Träger 3 aufweisen, welche die Kippachse 64 definiert. Im Beispiel ist diese Lagerung als Haken zum Einhängen der ersten Endscheibe 12 ausgestaltet. Außerdem kann diese Befestigung 63 an einem vom ersten Umfangsabschnitt entfernten, vorzugsweise diametral gegenüberliegenden zweiten Umfangsabschnitt der ersten Endscheibe 12 eine hier nicht gezeigte Fixierung zum lösbaren Festlegen der ersten Endscheibe 12 am Träger 3 aufweisen, z.B. in Form einer Rastverbindung oder einer Klammer oder einer Verschraubung.

Die in den Fig. 3 und 4 gezeigten Ausführungsformen unterscheiden sich dadurch voneinander, dass bei der in Fig. 3 gezeigten ersten Ausführungsform der Druckanschluss 22 aus zwei Teilen axial zusammengebaut ist. Erkennbar sind ein oberer Rohrkörper 58, das an die Rückspülgasversorgung anschließbar ist, und ein Koppelstück 59, das mit dem oberen Rohrkörper 58 verschraubt ist und das das Außengewinde 26 der Verschraubung 24 trägt. Hierdurch wird ein Nachrüstsatz geschaffen, mit dem konventionelle Filtereinrichtungen 1, bei denen der Druckanschluss 22 axial am ersten Endabschnitt 23 abgestützt ist, so umgebaut werden können, dass anschließend mittels des Koppelstücks 59 die axial feste Verbindung 24 zwischen Druckanschluss 22 und erstem Endabschnitt 23 herstellbar ist. Im Unterschied dazu zeigt Fig. 4 eine zweite Ausführungsform, bei der ein einstückiger Rohrkörper 60 zur Realisierung des Druckanschlusses 22 vorgesehen ist, der das Außengewinde 26 selbst aufweist.

Gemäß den Fig. 2 und 5 bis 8 kann die Stange 18 axial gegenüberliegend vom ersten Endabschnitt 23 einen axialen zweiten Endabschnitt 28 aufweisen, der durch die zweite Endscheibe 14 axial hindurchgeführt ist. Die zweite Endscheibe 14 ist zweckmäßig als geschlossene Endscheibe ausgestattet, so dass sie das Innere 17 des Filterkörpers 2 vom Rohraum 4 trennt. Um dennoch die Stange 18 mit dem zweiten Endabschnitt 28 durch die zweite Endscheibe 14 hindurchführen zu können, besitzt die zweite Endscheibe 14 eine entsprechende Durchtrittsöffnung 29. Die Stange 18 durchdringt die zweite Endscheibe 14 in dieser Durchtrittsöffnung 29 und ist somit mit ihrem zweiten Endabschnitt 28 außerhalb des Filterelements 2 im Rohraum 4 angeordnet. Die zweite Endscheibe 14 kann sich wie hier gezeigt radial und axial an der Stange 18 abstützen. Insoweit ist die zweite Endscheibe 14 abgesehen von der Durchtrittsöffnung 29 für die Stange 18 als geschlossene Endscheibe konzipiert. Dies vereinfacht die Abdichtung gegenüber der Umgebung. Beispielsweise liegt ein die Durchtrittsöffnung 29 einfassender Öffnungsrand 65 der zweiten Endscheibe 14 an einer nicht näher bezeichneten Ringstufe der Stange 18 an. Eine Belastung der zweiten Endscheibe 14 durch das Gewicht der Rotationsdüse 61 tritt dabei nicht auf, da die Rotationsdüse 61 über die Verbindung 24 axial fest mit dem Träger 3 verbunden ist.

Der zweite Endabschnitt 28 weist außerhalb des Filterelements 2 einen Drehmomenteingriff 30 auf, über den ein Befestigungsdrehmoment bzw. Anschraubdrehmoment zum Anschrauben des ersten Endabschnitts 23 an den Druckanschluss 22 in die Stange 18 einleitbar ist. Beispielsweise kann dieser Drehmomenteingriff 30 ein am zweiten Endabschnitt 28 ausgebildetes Außengewinde 31 aufweisen, an das ein Handgriff 32 anschraubbar ist. Hierzu besitzt der Handgriff 32 einen Gewindeabschnitt 33, der ein zum Außengewinde 31 komplementäres Innengewinde 34 enthält. Über den angeschraubten Handgriff 32 lässt sich dann das Anschraubdrehmoment in die Stange 18 einleiten. Beispielsweise lässt sich der Handgriff 32 bis zu einem hier nicht gezeigten Endanschlag, der bspw. durch eine Ringstufe am zweiten Endabschnitt 28 oder innerhalb des Handgriffs 32 gebildet sein kann, auf den zweiten Endabschnitt 28 aufschrauben. Bei einer weitergehenden Drehbewegung wird dann die Stange 18 mitgedreht, um sie am ersten Endabschnitt 23 an dem Druckanschluss 22 anzuschrauben.

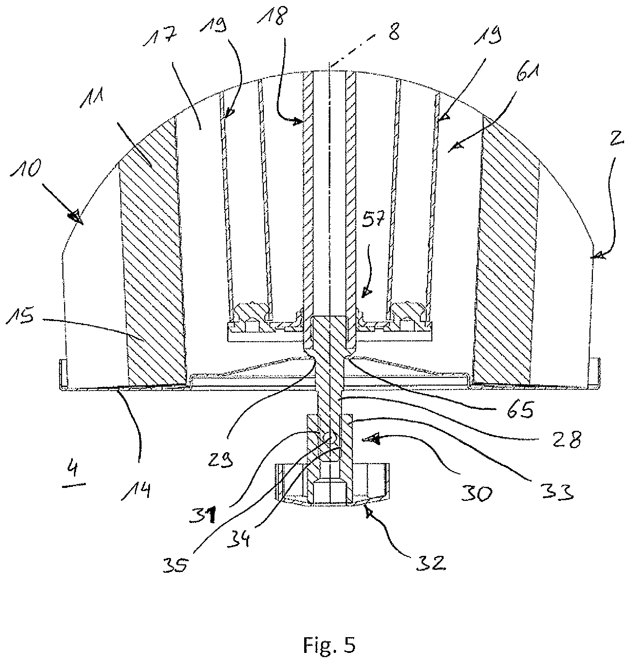

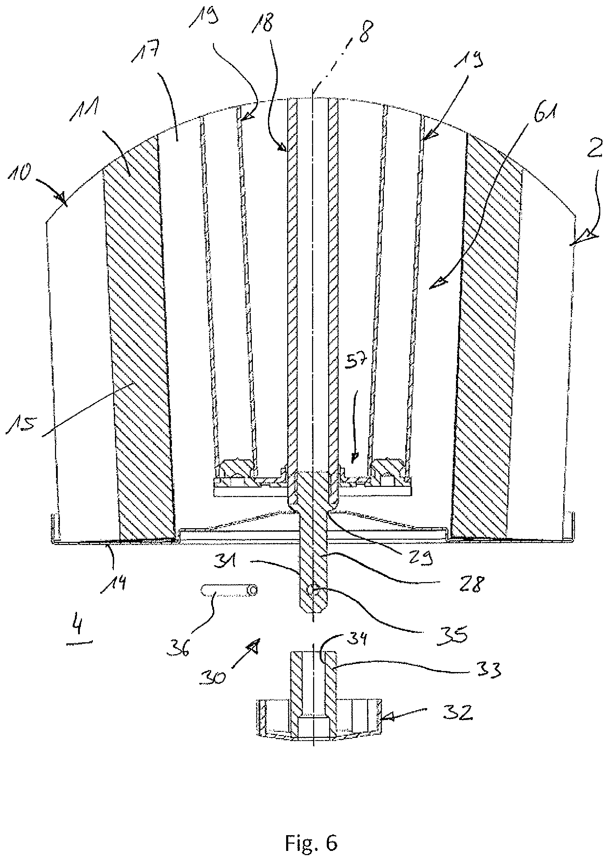

In Fig. 6 ist der Handgriff 32 vom zweiten Endabschnitt 28 abgeschraubt bzw. davon entfernt. Erkennbar besitzt der zweite Endabschnitt 28 einen Werkzeugeingriff 35, über den mit Hilfe eines in Fig. 6 angedeuteten dazu komplementären Werkzeugs 36 das Anschraubdrehmoment sowie ein entgegengesetztes Lösedrehmoment bzw. Abschraubdrehmoment in die Stange 18 einleitbar sind. Das Abschraubdrehmoment dient dann zum Lösen der Befestigung bzw. zum Abschrauben des ersten Endabschnitts 23 vom Druckanschluss 22. Wie sich den Fig. 5 und 6 entnehmen lässt, ist dieser Werkzeugeingriff 35 zweckmäßig am zweiten Endabschnitt 28 so positioniert, dass er bei angeschraubten Handgriff 32 gemäß Fig. 5 verdeckt ist, nämlich durch den Gewindeabschnitt 33.

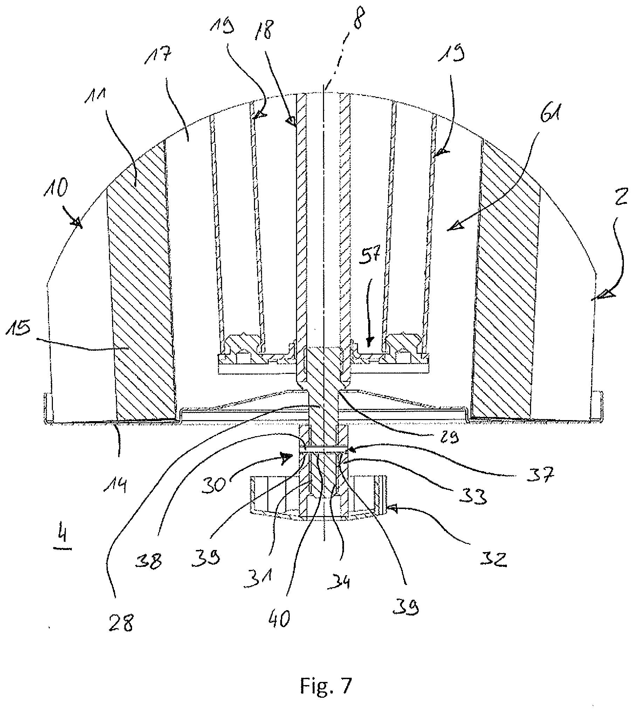

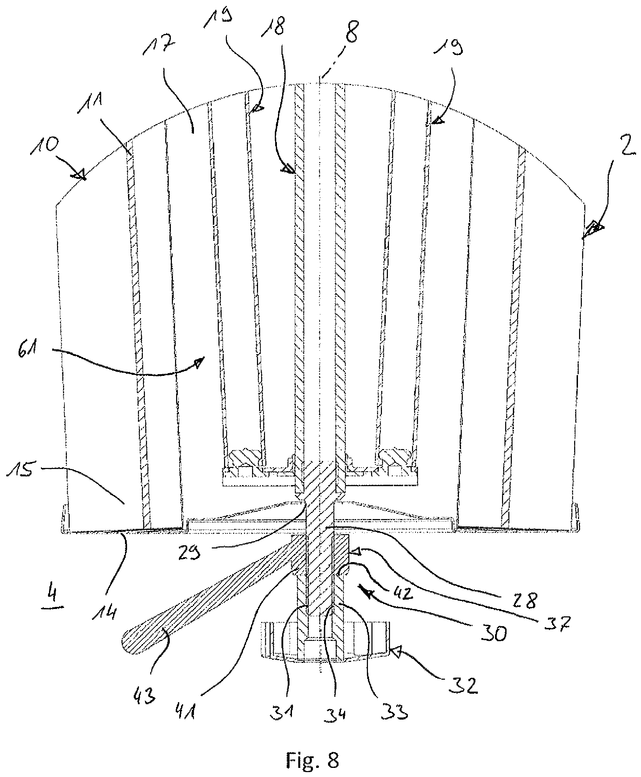

Die Fig. 7 und 8 zeigen Ausführungsformen, bei denen der angeschraubte Handgriff 32 mittels eines Sicherungselements 37 gegen ein Abschrauben gesichert ist. Das Sicherungselement 37 stellt dabei eine drehfeste Verbindung zwischen Handgriff 32 und zweitem Endabschnitt 28 her. In der Folge lassen sich über den Handgriff 32 Anschraubdrehmomente und Abschraubdrehmomente in die Stange 18 einleiten. Insbesondere kann dabei auf den vorstehend genannten Drehanschlag zwischen Handgriff 32 und zweitem Endabschnitt 28 verzichtet werden.

Im Beispiel der Fig. 7 ist das Sicherungselement 37 durch einen Splint 38 gebildet, der den Handgriff 32 im Gewindeabschnitt 33 und den zweiten Endabschnitt 28 im Bereich des Außengewindes 31 durchdringt. Hierzu enthält der Handgriff 32 im Gewindeabschnitt 33 zumindest eine Öffnung 39. Im Beispiel sind zwei derartige Öffnungen 39 vorgesehen, die einander diametral gegenüberliegen. Ferner enthält der zweite Endabschnitt 28 im Bereich des Außengewindes 31 eine weitere Öffnung 40, die im Beispiel als Durchgangsöffnung ausgestaltet ist. Der Splint 38 kann optional mit einem hier nicht gezeigten, manuell greifbaren Abzugselement, wie z. Bsp. einem Abzugsring, ausgestattet sein, um ein manuelles, also werkzeugloses Entfernen des Splints 38 zu ermöglichen.

Im Beispiel der Fig. 8 ist das Sicherungselement 37 als Kontermutter 41 ausgestaltet, die auf das Außengewinde 31 des zweiten Endabschnitts 28 aufgeschraubt ist. Die Kontermutter 41 ist dabei gegen eine axiale Stirnseite 42 des Handgriffs 32 gekontert. Die Stirnseite 42 befindet sich am Gewindeabschnitt 33 und ist der zweiten Endscheibe 14 zugewandt. Je nach Drehmoment, mit dem die Kontermutter 41 mit dem Handgriff 32 verspannt ist, lassen sich über den Handgriff 32 Anschraubdrehmomente und Abschraubdrehmomente in die Stange 18 einleiten. Ebenfalls lassen sich über die Kontermutter 41

Anschraubdrehmomente und Abschraubdrehmomente in die Stange 18 einleiten. Hierzu kann die Kontermutter 41 in herkömmlicher Weise mit einem Werkzeugeingriff, z. Bsp. für einen Schraubenschlüssel, versehen sein. Im Beispiel der Fig. 8 ist die Kontermutter 41 jedoch mit einem manuell betätigbaren Knebel 43 ausgestattet. Über diesen Knebel 43 lassen sich manuell, also werkzeuglos Abschraubdrehmomente und bei entsprechender Verspannung zwischen Kontermutter 41 und Handgriff 32 auch Anschraubdrehmomente in die Stange 18 einleiten. Ebenso lässt sich der Knebel 43 dazu verwenden, den Handgriff 32 zu kontern. Mit anderen Worten, der Knebel 43 kann auch zum manuellen Festziehen der Kontermutter 41 gegen den Handgriff 32 verwendet werden.

Bei allen hier gezeigten Ausführungsformen kann der Handgriff 32 für eine verbesserte manuelle Betätigbarkeit mit einer sternförmigen Außenkontur ausgestattet sein, so dass er auch als Sterngriff bezeichnet werden kann.

Wie sich insbesondere den Fig. 3 und 4 entnehmen lässt, ist die erste Endscheibe 12 als offene Endscheibe konfiguriert, so dass sie innerhalb des Filterkörpers 10 eine zentrale Scheibenöffnung 44 aufweist, durch die eine fluidische Verbindung zwischen dem vom Filterkörper 10 umschlossenen Inneren 17 des Filterelements 2 und dem Reinraum 5 besteht. In diese Scheibenöffnung 44 ist ein Zentrierring 45 eingesetzt, der eine zentrale Nabe 46 aufweist, die über mindestens eine, vorzugsweise über mehrere Speichen 47 an einem außenliegenden, im Profil L-förmigen Ringkörper 48 des Zentrierrings 45 gehalten ist. Die Nabe 46 dient zur axialen Führung des ersten Endabschnitts 23 der Stange 18. Gleichzeitig lässt sich mit Hilfe des Zentrierrings 45 eine vormontierbare Einheit aus Filterelement 2 und Rotationsdüse 61 mit Stange 18 und jeweiligem Düsenrohr 19 schaffen, bei der die Stange 18 mit dem jeweiligen daran gelagerten Düsenrohr 19 im Filterelement 2 positioniert ist. Im Bereich des ersten Endabschnitts 23 erfolgt die zentrale Positionierung mit Hilfe des Zentrierrings 45, da dieser über die Nabe 46 mit dem ersten Endabschnitt 23 zusammenwirkt. Im Bereich des zweiten Endabschnitts 28 erfolgt diese Zentrierung dadurch, dass der zweite Endabschnitt 28 in die Durchtrittsöffnung 29 der zweiten Endscheibe 14 eingesteckt ist. Nach dem Befestigen des Filterelements 2 am Träger 3 lässt sich über den zweiten Endabschnitt 28 die Verschraubung 24 zwischen ersten Endabschnitt 23 und Druckanschluss 22 herstellen. Ebenso lässt sich umgekehrt beim Demontieren des Filterelements 2 bei noch am Träger 3 befestigtem Filterelement 2 über den zweiten Endabschnitt 28 die Verschraubung 24 zwischen erstem Endabschnitt 23 und Druckanschluss 22 lösen.

Der Zentrierring 25 trägt hier eine weitere ringförmige Dichtung 49, mit der eine Verschlussplatte 50 zusammenwirken kann, die an einer Hülse 51 befestigt ist. Die Hülse 51 ist entlang des Druckanschlusses 22 axial verstellbar angeordnet und in einem Zylinder 52 mit einem Kolben 53 fest verbunden. Der Kolben 53 verschließt im Zylinder 52 einen Steuerraum 54, der über eine Steueröffnung 55 mit dem Inneren des hohlen Druckanschlusses 22 fluidisch verbunden ist, über den das Rückspülgas zugeführt wird. Sobald über den Druckanschluss 22 das unter Druck stehende Rückspülgas der Rotationsdüse 61 zugeführt wird, erfolgt damit gleichzeitig ein Druckanstieg im Steuerraum 54, der dazu führt, dass sich der Kolben 53 in Richtung auf das Filterelement 2 bewegt, dabei nimmt der Kolben 53 die Hülse 51 mit, die ihrerseits die Verschlussplatte 50 mitnimmt, bis diese an der weiteren Dichtung 49 des Zentrierrings 45 zur Anlage kommt. Somit ist dann das Innere 17 des Filterelements 2 von dem Reinraum 5 getrennt, wodurch der Rückspüleffekt der Rotationsdüse 61 verbessert wird.

Gemäß den Fig. 3 und 4 ist bei der Rotationsdüse 61 das jeweilige Düsenrohr 19 im Inneren des Filterkörpers 2 im Bereich der ersten Endscheibe 12 über eine erste Drehlagerung 56 an der Stange 18 drehbar gelagert. Innerhalb dieser ersten Lagerung 56 erfolgt auch die fluidische Verbindung zwischen dem ersten Endabschnitt 23 und dem jeweiligen Düsenrohr 19. Ferner ist gemäß den Fig. 5 bis 8 das jeweilige Düsenrohr 19 im Inneren 17 des Filterkörpers 2 im Bereich der zweiten Endscheibe 14 über eine zweite Lagerung 57 drehbar an der Stange 18 gelagert.

Der Werkzeugeingriff 35 ist im Beispiel der Fig. 5 und 6 als Durchgangsöffnung ausgestaltet, die den zweiten Endabschnitt 28 im Bereich des Außengewindes 31 durchdringt. Ebenso ist denkbar, den Werkzeugeingriff 35 durch zwei sich diametral gegenüberliegende ebene Flächen auszubilden, an denen bspw. ein Schraubenschlüssel ansetzbar ist.

## Patentansprüche

1. Filtereinrichtung zum Filtern von Gas,
- mit einem Filterelement (2), das einen ringförmigen Filterkörper (10) aus Filtermaterial (11), eine erste Endscheibe (12) an einem ersten Längsende (13) des Filterkörpers (2) und eine zweite Endscheibe (14) an einem zweiten Längsende (15) des Filterkörpers (2) aufweist,
- mit einer Reinigungseinrichtung (16) zum Abreinigen des Filtermaterials (11), die im Inneren (17) des Filterelements (2) eine Rotationsdüse (61) aufweist, die eine sich koaxial zur Längsmittelachse (8) des Filterelements (2) erstreckende, die zweite Endscheibe (14) durchsetzende Stange (18) und wenigstens ein an der Stange (18) um die Längsmittelachse (8) des Filterelements (2) drehbar gelagertes Düsenrohr (19) zum Rückspülen des Filtermaterials (11) aufweist,
- mit einem Träger (3), an dem das Filterelement (2) an der ersten Endscheibe (12) so befestigt ist, dass die erste Endscheibe (12) an einer Rohseite (6) des Trägers (3) eine Durchtrittsöffnung (9) des Trägers (3) einfasst,
- wobei die Reinigungseinrichtung (16) eine Halterung (21) aufweist, die an einer Reinseite (7) des Trägers (3) abgestützt ist und die einen Druckanschluss (22) zum Zuführen eines Rückspülgases zur Rotationsdüse (61) aufweist,
- wobei der Druckanschluss (22) durch einen axialen ersten Endabschnitt (23) der Stange (18) hindurch mit dem jeweiligen Düsenrohr (19) fluidisch verbunden ist,
**dadurch gekennzeichnet,**
**dass** der Druckanschluss (22) mit dem ersten Endabschnitt (23) axial fest verbunden ist.

2. Filtereinrichtung nach Anspruch 1,
**dadurch gekennzeichnet,**
**dass** die axial feste Verbindung (24) zwischen dem Druckanschluss (22) und dem ersten Endabschnitt (23) als lösbare Verbindung (24) ausgestaltet ist.

3. Filtereinrichtung nach Anspruch 2,
**dadurch gekennzeichnet,**
**dass** die Befestigung (63) der ersten Endscheibe (12) am Träger (3) so ausgestaltet ist, dass sie bei gelöster Verbindung (24) zwischen Druckanschluss (22) und erstem Endabschnitt (23) zum Wechseln des Filterelements (2) ein Kippen des Filterelements (2) relativ zum Träger (3) um eine im Bereich der ersten Endscheibe (12) verlaufende und sich quer zur Längsmittelachse (8) des Filterelements (2) erstreckende Kippachse (64) ermöglicht.

4. Filtereinrichtung nach einem der vorhergehenden Ansprüche,
**dadurch gekennzeichnet,**
**dass** die zweite Endscheibe (14) radial und/oder axial an der Stange (18) abgestützt ist.

5. Filtereinrichtung nach einem der vorhergehenden Ansprüche,
**dadurch gekennzeichnet,**
**dass** die axial feste Verbindung zwischen dem Druckanschluss (22) und dem ersten Endabschnitt (23) als Verschraubung (24) ausgestaltet ist.

6. Filtereinrichtung nach einem der vorhergehenden Ansprüche,
**dadurch gekennzeichnet,**
- **dass** der Druckanschluss (22) über die Halterung (21) drehfest am Träger (3) gehalten ist,
- **dass** der erste Endabschnitt (23) über eine Drehbewegung am Druckanschluss (22) befestigt ist.

7. Filtereinrichtung nach Anspruch 6,
**dadurch gekennzeichnet,**
**dass** der erste Endabschnitt (23) am Druckanschluss (22) befestigbar ist oder daran befestigbar und davon lösbar ist, wenn das Filterelement (2) am Träger (3) befestigt ist.

8. Filtereinrichtung nach Anspruch 6 oder 7,
**dadurch gekennzeichnet,**
**dass** ein axialer zweiter Endabschnitt (28) der Stange (18) durch die zweite Endscheibe (14) hindurchgeführt ist und außerhalb des Filterelements (2) einen Drehmomenteingriff (30) aufweist, über den ein Befestigungsdrehmoment zum Befestigen des ersten Endabschnitts (23) am Druckanschluss (22) in die Stange (18) einleitbar ist.

9. Filtereinrichtung nach Anspruch 8,
**dadurch gekennzeichnet,**
**dass** der Drehmomenteingriff (30) ein am zweiten Endabschnitt (28) ausgebildetes Außengewinde (31) aufweist, an das ein Handgriff (32) anschraubbar ist, so dass über den angeschraubten Handgriff (32) das Befestigungsdrehmoment in die Stange (18) einleitbar ist.

10. Filtereinrichtung nach Anspruch 8 oder 9,
**dadurch gekennzeichnet,**
**dass** der Drehmomenteingriff (30) einen am zweiten Endabschnitt (28) ausgebildeten Werkzeugeingriff (35) aufweist, über den mittels eines dazu komplementären Werkzeugs (36) das Befestigungsdrehmoment und ein Lösedrehmoment zum Lösen der Befestigung des ersten Endabschnitts (23) am Druckanschluss (22) in die Stange (18) einleitbar sind.

11. Filtereinrichtung nach Anspruch 9 und 10,
**dadurch gekennzeichnet,**
**dass** der Werkzeugeingriff (35) bei angeschraubtem Handgriff (32) verdeckt ist.

12. Filtereinrichtung nach Anspruch 9,
**dadurch gekennzeichnet,**
**dass** der angeschraubte Handgriff (32) mittels eines Sicherungselements (37) gegen ein Abschrauben gesichert ist, so dass über den Handgriff (32) auch ein Lösedrehmoment zum Lösen der Befestigung des ersten Endabschnitts (23) am Druckanschluss (22) in die Stange (18) einleitbar ist.

13. Filtereinrichtung nach Anspruch 12,
**dadurch gekennzeichnet,**
- **dass** das Sicherungselement (37) ein Splint (38) ist, der eine Öffnung (39) in einem Gewindeabschnitt (33) des Handgriffs (32) durchdringt und in eine Öffnung (40) im Außengewinde (41) des zweiten Endabschnitts (28) eindringt, oder
- **dass** das Sicherungselement (37) eine auf das Außengewinde (31) des zweiten Endabschnitts (28) aufgeschraubte Kontermutter (41) ist, die gegen eine der zweiten Endscheibe (14) zugewandte Stirnseite (42) des Handgriffs (32) gekontert ist, wobei insbesondere vorgesehen sein kann, dass die Kontermutter (41) einen manuell betätigbaren Knebel (43) aufweist, über den das Lösedrehmoment in die Stange (18) einleitbar ist.

14. Filtereinrichtung nach einem der vorhergehenden Ansprüche,
**dadurch gekennzeichnet,**
**dass** die erste Endscheibe (12) eine zentrale Scheibenöffnung (44) aufweist, in die ein Zentrierring (45) eingesetzt ist, der über wenigstens eine Speiche (47) eine Nabe (46) koaxial zur Längsmittelachse (8) des Filterelements (2) trägt, in der der erste Endabschnitt (23) der Stange (18) geführt ist.

15. Filtereinrichtung nach einem der vorhergehenden Ansprüche,
**dadurch gekennzeichnet,**
**dass** das jeweilige Düsenrohr (19) im Inneren (17) des Filterkörpers (2) im Bereich der ersten Endscheibe (12) und im Bereich der zweiten Endscheibe (14) an der Stange (18) drehbar gelagert ist.
